# EUROPÄISCHE PATENTSCHRIFT

(11) **EP 1 941 766 B1**
(45) Veröffentlichungstag und Bekanntmachung des Hinweises auf die Patenterteilung: **06.01.2010**
(21) Anmeldenummer: 06807008.5
(22) Anmeldetag: 05.10.2006
(51) Int. Cl.: H04W 4/02

(54) **AUSGEBEN VON ALARMMELDUNGEN AN TEILNEHMERENDGERÄTEN EINES FUNK-KOMMUNIKATIONSSYSTEMS**
TRANSMITTING ALARM MESSAGES TO TERMINALS OF A SUBSCRIBER RADIOCOMMUNICATION SYSTEM
ENVOYER DES MESSAGES D'ALARME A DES TERMINAUX D'ABONNE D'UN SYSTEME DE RADIOCOMMUNICATION

(30) Priorität: 19.10.2005 DE 102005050416
(43) Veröffentlichungstag der Anmeldung: 09.07.2008
(73) Patentinhaber: Nokia Siemens Networks GmbH & Co. KG, 81541 München (DE)
(72) Erfinder: PUNZ, Gottfried, A-1080 Wien (AT)
(86) Internationale Anmeldenummer: PCT/EP2006/067100
(87) Internationale Veröffentlichungsnummer: WO 2007/045564

(56) Entgegenhaltungen:
- US-A- 5 909 651
- US-A1- 2003 143 974
- US-A1- 2005 037 728

## Beschreibung

Die Erfindung betrifft ein Verfahren zum Ausgeben von Alarmmeldungen an Teilnehmerendgeräten eines Funk-Kommunikationssystems, insbesondere zum Ausgeben an mobilen Teilnehmerendgeräten eines Mobilfunksystems. Weiterhin betrifft die Erfindung ein Teilnehmerendgerät, eine Funknetzsteuerung sowie ein Funk-Kommunikationssystem mit jeweils Mitteln zum Durchführen des erfindungsgemäßen Verfahrens.

Das Auftreten von Katastrophen natürlicher oder menschlicher Ursache stellt insbesondere bezüglich einer schnellen und umfassenden Alarmierung der betroffenen Bevölkerung für die öffentliche Hand weiterhin eine große Herausforderung dar. Die klassische Verwendung von Alarmsirenen, die in zumindest einigen Ländern flächendeckend installiert sind, hat dabei insbesondere den Nachteil, dass keinerlei spezifische Informationen übertragen werden können, zumal nicht davon auszugehen ist, dass die Bevölkerung unterschiedliche Alarmierungen zu unterscheiden wüsste. Weitere bekannte Verfahren zur Alarmierung der Bevölkerung sind weiterhin Fernseh- und Rundfunkausstrahlungen, wobei diese nachteilig nur von im Betrieb befindlichen Endgeräten empfangen werden können.

Neben dieser Nutzung öffentlicher Einrichtungen wurden Verfahren entwickelt, welche eine Alarmierung über leitungsgebundene oder mobile Kommunikationssysteme durchführen. Besonders Mobilfunksysteme scheinen dabei für derartige Anwendungen geeignet zu sein, da insbesondere in Ländern mit einer hohen Penetrationsrate ein großer Teil der Bevölkerung unabhängig von ihrem aktuellen Aufenthaltsort erreicht werden kann. Kommunikationssytem-basierte Verfahren weisen jedoch den Nachteil auf, dass die dedizierte Anwahl einer großen Anzahl von Telefonen einen großen Zeitraum in Anspruch nimmt. Dies ist insbesondere bei der Nutzung des so genannten Kurznachrichten-Dienstes (SMS - Short Message Service), wie er unter anderem in dem bekannten GSM-Mobilfunksystem verwirklicht ist, der Fall. Zudem hat die Versendung von Kurznachrichten negativ zur Folge, dass das in der Regel bereits stark belastete Mobilfunksystem, zusätzlich belastet wird, wodurch es zu weiteren Verzögerungen bei der Aussendung von Kurznachrichten kommen kann.

Zur Beschleunigung der Aussendung von Kurznachrichten werden daher Verfahren eingesetzt, welche die so genannte "Cell Broadcasting"-Funktionalität des GSM-Mobilfunksystems nutzen. Hierzu wird beipielhaft auf die Internet-Seite http://www.cell-alert.co.uk/emergency_management.htm verwiesen, welche auch obige Ausführungen stützt. Trotz der hierdurch erzielten Vorteile bezüglich der Geschwindigkeit der Alarmierung und Belastung des Mobilfunksystems ist es jedoch nachteilig erforderlich, dass der jeweilige Teilnehmer die Funktion des Empfangs von Cell-Broadcast-Nachrichten an seinem Endgerät freigegeben hat, da das Endgerät ansonsten derartige Nachrichten nicht empfängt bzw. auf dem Display ausgibt.
Weiter ist in US2005/037728 A1 ein Stand der Technik offenbart bei dem an den Teilnehmerendgeräten eine empfangene Alarm-Rundsendenachricht ausgegeben wird.

Aufgabe der Erfindung ist es daher, ein alternatives Verfahren anzugeben, welches einen gesicherten Empfang und Ausgabe von Alarmmeldungen an Teilnehmerendgeräten sicher stellt.

Gelöst wird diese Aufgabe durch die Merkmale der unabhängigen Patentansprüche. Vorteilhafte Ausgestaltungen der Erfindung sind den abhängigen Patentansprüchen entnehmbar.

Erfindungsgemäß wird von zumindest einer Basisstation eines Funk-Kommunikationssystems mittels zumindest einer Systeminformation in einem Steuerkanal den Teilnehmerendgeräten das Vorliegen eines Alarms signalisiert, in dessen Folge von den Teilnehmerendgeräten zumindest eine jeweils gespeicherte Alarmmeldung ausgegeben wird.

Vorteilhaft wird durch die erfindungsgemäßen.Merkmale unter anderem ermöglicht, dass Teilnehmerendgeräte unabhängig von ihrem aktuellen Status, d.h. unabhängig davon, ob sie sich in einem so genannten Idle-Mode oder in einer aktiven Sprach- oder Nutzdatenübertragung befinden, mittels einer Systeminformation über das Vorliegen eines Alarms informiert werden, wodurch eine weitaus größere Abdeckung erzielt wird. Mithin kann das jeweilige Teilnehmerendgerät individuell die Ausgabe einer Alarmmeldung steuern. So kann die Ausgabe beispielsweise in einer von dem Teilnehmer ausgewählten Sprache erfolgen.

Vorteilhaft gegenüber der einleitend beschriebenen Nutzung der Cell-Broadcast-Funktionalität ist weiterhin, dass keinerlei Abhängigkeit zwischen dem Empfang der in einem Steuerkanal übertragenen Systeminformationen und dem Vorliegen eines Abonnements eines derartigen Dienstes bzw. des Einschaltens dieses Dienstes besteht. Vielmehr ist jedes Teilnehmerendgerät in der Lage, Systeminformationen zu empfangen und entsprechend auszuwerten. zudem erfordert das erfindungsgemäße Verfahren vorteilhaft keinerlei Interaktion des Teilnehmers.

Vorteilhaft vermeidet das erfindungsgemäße Verfahren Störungen von zum Zeitpunkt der Alarmübertragung aktiven Diensten. So kann beispielsweise von dem Teilnehmerendgerät eine Alarmmeldung ausgeben werden, ohne eine aktive Sprach- oder Datenverbindung unterbrechen zu müssen, sodass der Teilnehmer anschließend die Verbindung normal weiterführen und beenden kann, oder aber während der Alarmausgabe die bestehende Verbindung beendet.

Teilnehmerendgeräte, die eine Veränderungen bzw. Ergänzung von Systeminformationen nach der Erfindung nicht unterstützen, sind von dem erfindungsgemäßen Verfahren nicht nachteilig betroffen, da sie zusätzliche Informationsblöcke ignorieren.

Nachfolgend wird die Erfindung, insbesondere unter Bezugnahme auf in Figuren dargestellten Ausführungsbeispielen, näher erläutert.
- FIG 1: ein Blockschaltbild eines Funk-Kommunikationssystems basierend auf dem UMTS-Standard,
- FIG 2: eine Rahmenstruktur mit zwei Beispielen einer Übertragung von Alarmmeldungen in Systeminformationsblöcken, und
- FIG 3: ein Ablaufdiagramm des erfindungsgemäßen Verfahrens.

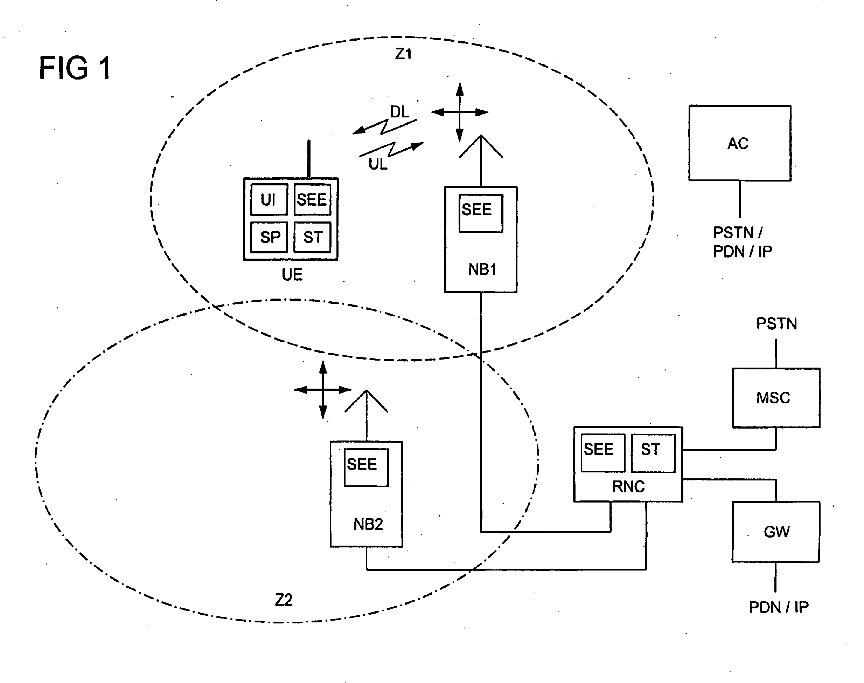

In der FIG 1 ist beispielhaft eine vereinfachte Struktur eines Funk-Kommunikationssystems nach dem bekannten UMTS-Standard dargestellt, wobei eine Realisierung des erfindungsgemäßen Verfahrens in Funk-Kommunikationssystemen nach anderen Standards, beispielsweise GSM oder zukünftige Generationen, in gleicher Weise möglich ist.

Die Struktur eines Funk-Kommunikationssystems nach dem UMTS-Standard besteht aus einer oder mehreren Mobilvermittlungsstellen MSC (Mobile Switching Center), welche eine Vermittlung von so genannten leitungsvermittelte Verbindungen (engl. Circuit Switched) sowie eine Verwaltung von verschiedenen Funktionalitäten des Systems durchführen. Die Mobilvermittlungsstelle MSC übernimmt zudem die Funktion des Übergangs zu dem öffentlichen Telefonnetz PSTN (Public Switched Telephone Network). Neben Mobilvermittlungsstellen MSC existieren weiterhin so genannte Gateways GW, beispielsweise SGSN bzw. GGSN, welche einen Übergang paketvermittelter Verbindungen (engl. Packet Switched) in Netzwerke mit paketorientierter Übertragung PDN (engl. Packet Data Network), beispielsweise dem Internet mit einer Übertragung nach dem Internet Protokoll IP, ermöglichen.

An die Mobilvermittlungsstelle MSC bzw. dem Gateway GW sind eine Vielzahl von Funknetzsteuerungen RNC (Radio Network Controller) angeschlossen, in denen unter anderem physikalische Ressourcen der Funkschnittstelle verwaltet werden. An eine Funknetzsteuerung RNC ist wiederum eine Vielzahl von Basisstationen NB1, NB2 (Node B) angeschlossen, welche unter Nutzung von zugewiesenen physikalischen Ressourcen der Funkschnittstelle Verbindungen zu Endgeräten UE (User Equipment) aufbauen und auslösen können. Jede Basisstation NB1, NB2 versorgt mit den zugeteilten physikalischen Ressourcen jeweils mindestens ein geographisches Gebiet, welches auch als Funkzelle Z1, Z2 bezeichnet wird. Die Übertragung auf der Funkschnittstelle erfolgt sowohl in Aufwärtsrichtung UL (Uplink) als auch in Abwärtsrichtung DL (Downlink). Sowohl die Basisstationen NB1, NB2 als auch Endgeräte UE weisen jeweils Sende/Empfangseinrichtungen SEE für die Signalübertragung auf der Funkschnittstelle auf.

Weiterhin weist auch die Funknetzsteuerung eine Sende/Empfangseinrichtung SEE für einen Austausch von Daten und Signalisierungen mit den Basisstationen sowie der Mobilvermittlungsstelle bzw. dem Gateway auf. Das Endgerät UE sowie die Funknetzsteuerung RNC weisen zudem jeweils eine Steuereinrichtung ST auf, mit der das erfindungsgemäße Verfahren, wie es nachfolgend beschrieben wird, durchgeführt werden kann.

In Mobilfunksystemen basierend auf dem GSM- und UMTS-Standard können Systeminformationen, welche auf so genannten Rundsendekanälen, beispielsweise den so genannten BCCH bzw. BCH (Broadcast Common Control Channel bzw. Broadcast Control Channel), von Basisstationen ausgesendet werden, von Teilnehmerendgeräten im so genannten Idle Mode empfangen und ausgewertet werden. Hierzu sei auf die technische Spezifikation nach der Referenz [1] verwiesen. Sofern sich Teilnehmerendgeräte jedoch in dem so genannten Connected Mode befinden, d.h. aktiv eine Verbindung zur Sprach- oder Paketdatenübertragung unterhalten, können Systeminformationen auch über so genannte dedizierte Steuerkanäle (Dedicated Control Channel) übertragen werden. Hierzu sei auf die technischen Spezifikationen nach den Referenzen [2] und [3] verwiesen. Diese Unterscheidung soll nachfolgend berücksichtigt werden, wobei zunächst eine Realisierung der Erfindung in einem UMTS-basierten System und nachfolgend in einem GSM-basierten System beschrieben wird.

Nach Tabelle 8.1.1 der [2] kann eine Systeminformation in einem UMTS-basierten System unterschiedliche geographische Reichweiten der Aussendung, als "area scope" bezeichnet, haben.

So wird beispielsweise nach einer Aussendung in dem Abdeckungsbereich des gesamten Netzes (PLMN - Public Land Mobile Network) oder lediglich in einer Funkzelle (Cell) unterschieden.

Die Struktur einer Systeminformation ist in der Regel sehr flexibel, da sie modular aufgebaut und somit in einfacher Weise erweiterbar ist. So kann zur Umsetzung der Erfindung eine Systeminformation um eine Signalisierung eines Alarms bzw. einer Alarmmeldung erweitert werden. Eine derartige Erweiterung ist unkritisch für das so genannte RRC-Protokoll (Radio Resource Control). In der Vergangenheit wurde beispielsweise bereits zur Realisierung von Lokalisierungsdiensten eine Erweiterung von Systeminformationen vorgenommen. Hinzu kommt, dass eine beispielsweise durch Erweiterungen veränderte Systeminformation nach dem RRC-Protokoll (Paging Type 1, System Information Change Indication) von Teilnehmerendgeräten gelesen und ausgewertet werden muss. So wird eine voraussichtlich nur selten zu übertragende Systeminformation mit einer Alarmmeldung von den empfangenden Teilnehmerendgeräten umgehend wahrgenommen.

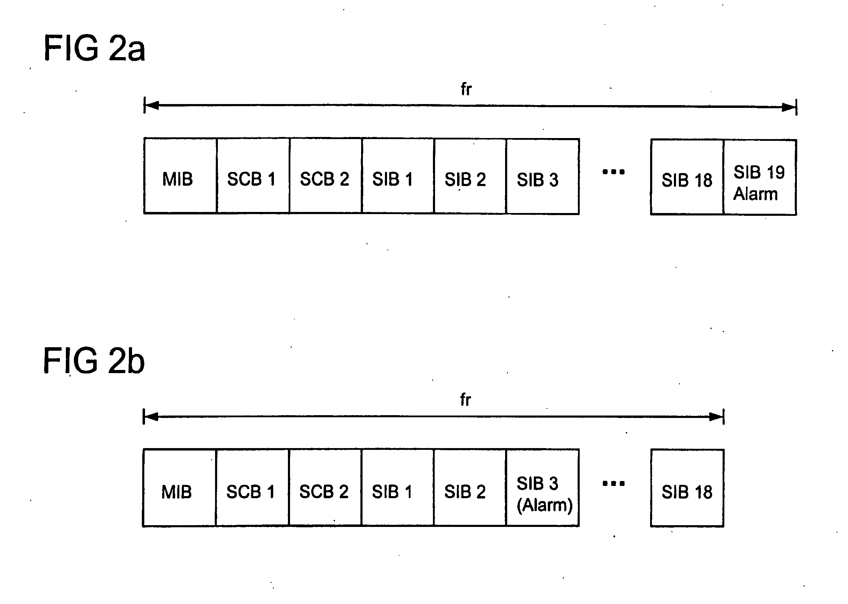

Eine Erweiterung einer Systeminformation kann beispielsweise entsprechend der Darstellung in der FIG 2a erfolgen. FIG 2a zeigt beispielhaft die Struktur eines wiederholt ausgesendeten Rahmens fr mit einer Vielzahl von Systeminformationsblöcken SIB sowie einem so genannten Master Information Block MIB und zwei so genannten Scheduling Blöcken SCB 1 und SCB 2. Die nach Tabelle 8.1.1 der [1] aktuell existierenden Systeminformationsblöcke SIB 1 bis SIB 18 werden beispielsweise um einen neuen Systeminformationsblock SIB 19 ergänzt.

In der Tabelle würde diesem ergänzten Systeminformationsblock als "area scope" beispielsweise "cell" zugewiesen, um diesen funkzellindividuell aussenden zu können. Dies ist insbesondere sinnvoll, da in der Regel Alarmmeldungen nur einen bestimmten örtlich begrenzten Teil des gesamten Netzes betreffen.

Der ergänzte Systeminformationsblock SIB 19 weist dabei eine bestimmte Länge auf. Steht beispielsweise ein Byte (acht Bit) als Nettoinformation zur Verfügung, so können mittels dieser acht Bit N = 255 unterschiedliche so genannte Alarmkategorie-Indikatoren (Alert Category Indicators), welche beispielsweise unterschiedliche Alarmursachen wie Feuer, Erdbeben, überflutung etc. spezifizieren, kodiert werden, welche schließlich als unterschiedliche Alarmmeldungen über die Nutzerschnittstelle UI (User Interface) des empfangenden Teilnehmerendgerätes ausgegeben werden.

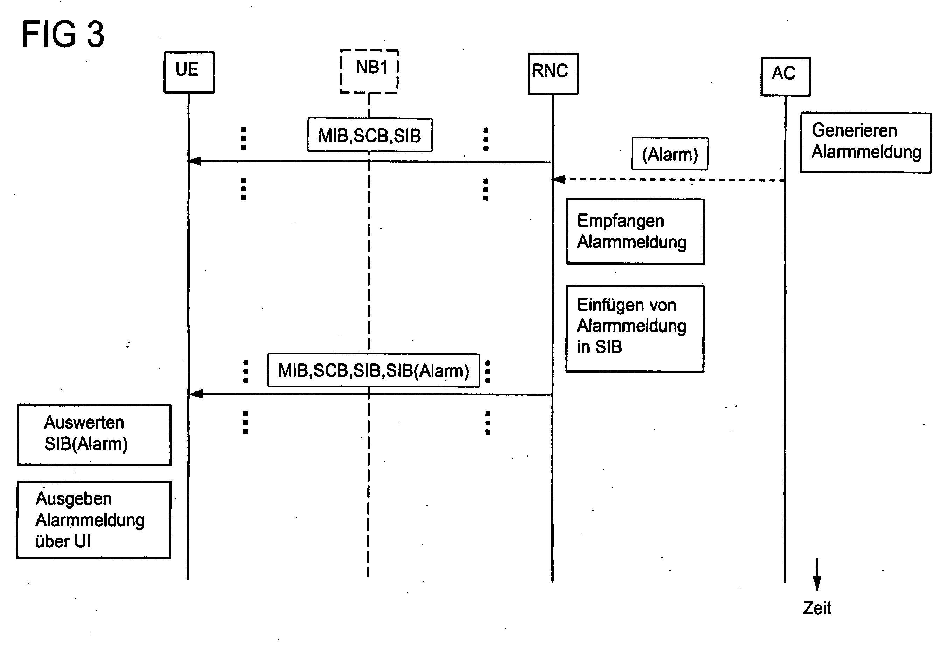

Alternativ zu einer Erweiterung der Systeminformation durch einen oder mehrere zusätzliche Systeminformationsblöcke ist ebenfalls eine Verwendung von Teilen eines oder mehrerer normalerweise für andere Signalisierungen genutzter Systeminformationsblöcke denkbar, wie es beispielhaft in FIG 2b dargestellt ist. Mittels beispielsweise einer speziellen Kodierung von Alarmkategorie-Indikatoren kann den Teilnehmerendgeräten, die eine Veränderung des Inhalts der empfangenen Systeminformation bemerken, das Vorliegen eines Alarms angezeigt und von diesen entsprechend umgesetzt werden. FIG 3b gibt beispielhaft an, dass der Systeminformationblock SIB 3 mit einem Alärmkategorie-Indikator kodiert wurde. Der Systeminformationsblock SIB 3, welcher in dem Kapitel 8.1.1.6.3 der [1] spezifiziert ist, ist insbesondere geeignet, da er von Teilnehmerendgeräten sowohl im Idle- als auch im Connected-Mode gelesen wird. Alternativ geeignete Systeminformationsblöcke können in gleicher Weise für die Signalisierung von Alarmkategorie-Indikatoren gewählt werden.

Die Systeminformation wird beispielsweise von der steuernden Funknetzsteuerung RNC für eine Anzahl von Funkzellen, beispielsweise alle oder nur eine Auswahl Funkzellen der über die Funknetzsteuerung angebundenen Basisstationen NB, ergänzt bzw. verändert. Abhängig von der Alarmierung, die die Funknetzsteuerung RNC, ggf. über weitere Einrichtungen des Systems wie der Mobilvermittlungsstelle MSC oder einem Gateway GW, von einer zentralen Instanz, beispielsweise einer so genannten Alarmzentrale AC (Alarm Centre) einer öffentlichen oder privaten Einrichtung empfängt, wird von der Funknetzsteuerung RNC eine entsprechende Systeminformation konfiguriert und in dem betroffenen Gebiet von den dieses Gebiet abdeckenden Basisstationen ausgesendet. Die Alarmierung der zentralen Instanz betrifft dabei beispielsweise eine konkrete Vorgabe des Alarmtyps sowie der Funkzellen bzw. des geographischen Gebiets, in denen der Alarm ausgesendet werden soll. Die Systeminformation wird von der Funknetzsteuerung für ein konfigurierbares Zeitintervall, beispielsweise einige Sekunden, um die Alarmsignalisierung erweitert, sodass es zu keiner dauerhaften Störung von aktiven Verbindungen kommt. Dies kann ergänzend mehrmals erfolgen, um einen sicheren Empfang seitens der empfangenden Teilnehmerendgeräte sicherzustellen.

Nach der [1] liest ein Teilnehmerendgerät Systeminformationen, welche auf einen Rundsendekanal BCH von einer Basisstation ausgesendet werden, sowohl im Idle-Mode als auch im Connected-Mode in den folgenden Stati: CELL_FACH, CELL_PCH, URA_PCH und CELL_DCH.

Ergänzend können Teilnehmerendgeräte, die im FDD-Modus den gleichzeitigen Empfang eines SCCPCH (Secondary Common Control Physical Channel) sowie eines DPCH (Dedicated Physical Channel) unterstützen, beispielsweise Systeminformationen auf dem FACH-Transportkanal empfangen, wenn sie sich in dem so genannten CELL_DCH-Status befinden.

In einem GSM-basierten System kann eine Umsetzung des erfindungsgemäßen Verfahrens, insbesondere wenn sich das Teilnehmerendgerät im Idle-Mode befindet, weitgehend entsprechend der Umsetzung in einem UMTS-basierten System erfolgen.

Handelt es sich bei dem Teilnehmerendgerät um ein Gerät, welches nur leitungsvermittelte (CS - Circuit Switched) Dienste unterstützt, oder ist kein PBCCH (Packet Broadcast Control Channel) in der Funkzelle verfügbar, so werden die Systeminformationen des Rundsendekanals BCCH gelesen. Unterstützt das Teilnehmerendgerät hingegen paketvermittelte (PS - Packet Switched) Dienste und ist ein PBCCH in der Funkzelle verfügbar, so liest das Teilnehmerendgerät Systeminformationen des PBCCH. Hierzu sei auf die Kapitel 5.5.1.2 und 5.5.1.3 der [3] verwiesen.

In dem Rundsendekanal BCCH kann beispielsweise ein Byte des "SI 4 Rest Octets" in der Systeminformation Typ 4-Nachricht für die Alarmsignalisierung bzw. Alarmkategorieindikation genutzt werden. Hierzu sei auf das Kapitel 10.5.2.35 der [2] verwiesen. Entsprechend kann bei Verfügbarkeit eines PBCCH eine Kodierung einer Alarmsignalisierung bzw. Alarmkategorieindikation innerhalb einer Paketsysteminformation erfolgen. Hierzu sei auf die Kapitel 11.2.18 bis 11.2.25c der [3] verwiesen.

Im Verbindungsmodus (Connected-Mode), d.h. während einer aktiven leitungsvermittelten Verbindung, oder im Paketübertragungsmodus (Packet Transfer Mode), d.h. während einer aktiven Paketdatenübertragung, kann in vergleichbarer Weise eine Systeminformationsnachricht auf einem dedizierten oder assoziierten Steuerkanal (Dedicated or Associated Control Channel) übertragen werden. Hierzu kann beispielsweise ein Byte des "SI 6 Rest Octects" in der Systeminformation Typ 6-Nachricht, welche auf dem so genannten SACCH (Slow Associated Control Channel) übertragen wird, verwendet werden. Das Informationselement "SI 6 Rest Octects" weist eine feste Länge von sieben Byte auf, von denen aktuell lediglich zwei oder drei genutzt werden, sodass derzeit noch mindestens vier Bytes zur weiteren Verwendung zur Verfügung stehen. Im Paketübertragungsmodus sollte eine Kodierung einer Alarmsignalisierung bzw. Alarmkategorieindikation innerhalb einer auf dem PACCH (Packet Associated Control Channel) übertragenen Systeminformationsnachricht erfolgen. Hierzu sei nochmals auf die Kapitel 11.2.18 bis 11.2.25c der [3] verwiesen.

Anhand des beispielhaften Ablaufdiagramms der FIG 3, bezugnehmend auf die Systemkonfiguration der FIG 1 und die Rahmenstruktur der FIG 2, wird nachfolgend nochmals das erfindungsgemäße Verfahren beschrieben. Es sei angenommen, dass von der Basisstation NB1, welche von dem Verfahren nur indirekt betroffen ist, periodisch Signalisierungsblöcke SIB sowie weitere Informationsblöcke, insbesondere ein Master-Informationsblock MIB, in einem Rundsendekanal auf der Funkschnittstelle ausgesendet werden, sodass in der Funkzelle Z1 der Basisstation NB1 befindliche Teilnehmerendgeräte UE diese empfangen können.

Wird nun von einer öffentlichen oder privaten so genannten Alarmzentrale AC, beispielsweise einer Einsatzleitzentrale der Feuerwehr, eine Alarmmeldung generiert, so wird diese nach nicht dargestellter weiterer Verarbeitung, Umsetzung und Definition, in welchem geographischen Gebiet diese Alarmmeldung ausgesendet werden soll, zu der Funknetzsteuerung RNC übertragen bzw. signalisiert. Die Funknetzsteuerung wiederum empfängt die Alarmmeldung Alarm und fügt einen entsprechenden Alarmkategorie-Indikator Alarm in einen Systeminformationblock SIB ein. Dabei kann die Alarmmeldung nach vorstehender Beschreibung zu FIG 2a und 2b beispielsweise mittels eines ergänzten speziellen Systeminformationsblocks oder mittels einer Kodierung eines für weitere Signalisierungen verwendeten Systeminformationsblocks ergänzt werden. Gegebenenfalls wertet die Funknetzsteuerung RNC anhand des zuvor definierten geographischen Gebietes vor einem Einfügen des Alarmkategorie-Indikators Alarm in den Rahmen fr aus, von welcher Basisstation bzw. welchen Basisstationen die empfangene Alarmmeldung ausgesendet werden soll, und ergänzt entsprechend die Rahmen fr der ausgewählten Basisstation bzw. Basisstationen.

Von dem Teilnehmerendgerät UE, welches sich in der Funkzelle der Basisstation NB1 befindet, wird schließlich der Alarmkategorie-Indikator gemeinsam mit weiteren Systeminformationsblöcken empfangen und ausgewertet, durch Zugriff auf in einer Speichereinrichtung SP des Teilnehmerendgerätes UE gespeicherte Alarmmeldungen in eine für den Nutzer des Teilnehemerendgerätes UE verständliche Alarmmeldung umgesetzt, und über eine Nutzerschnittstelle UI beispielsweise als optische und/oder akustische Anzeige ausgegeben.

Neben den vorangehend beschriebenen Verfahren umfasst die Erfindung weiterhin entsprechende Implementierungen des Verfahrens in den betroffenen Komponenten bzw. Einrichtungen eines Funk-Kommunikationssystems. Diese weisen hierzu entsprechend angepasste Mittel zum Durchführen des erfindungsgemäßen Verfahrens auf.

### Referenzen

[1] 3GPP TS 25.331, Rel. 6.4.0 (2004-12), Technical Specification Group Radio Access Network, Radio Resource Control (RRC) protocol specification
[2] 3GPP TS 44.018, Rel. 7.1.0 (2005-09), Technical Specification Group GSM/EDGE Radio Access Network, Radio Resource Control (RRC) protocol
[3] 3GPP TS 44.060, Re1.7.1.0 (2005-09), Technical Specification Group GSM/EDGE Radio Access Network, General Packet Radio Service (GPRS), Mobile Station (MS) - Base Station System (BSS) interface, Radio Link Control/Medium Access Control (RLC/MAC) protocol

## Patentansprüche

1. Verfahren zum Ausgeben von Alarmmeldungen an Teilnehmerendgeräten (UE) eines Funk-Kommunikationssystems, bei dem von zumindest einer Basisstation (NB1) des Funk-Kommunikationssystems mittels zumindest einer Systeminformation (SIB) in einem Steuerkanal den Teilnehmerendgeräten (UE) das Vorliegen eines Alarms signalisiert wird,
**dadurch gekennzeichnet, dass**
in Folge des Empfangs der zumindest einen Systeminformation (SIB) von den Teilnehmerendgeräten (UE) zumindest eine jeweils gespeicherte Alarmmeldung ausgegeben wird.

2. Verfahren nach Anspruch 1, wobei
die zumindest eine gespeicherte Alarmmeldung optisch und/oder akustisch von den Teilnehmerendgeräten (UE) ausgegeben wird.

3. Verfahren nach Anspruch 1 oder 2, bei dem
mittels der zumindest einen Systeminformation (SIB) eine Mehrzahl von Alarmkategorien (Alarm) unterscheidbar ist, welche von den Teilnehmerendgeräten (UE) als entsprechende Alarmmeldungen ausgegeben werden.

4. Verfahren nach Anspruch 3, bei dem
in den Teilnehmerendgeräten (UE) den Alarmkategorien (Alarm) zugeordnete Alarmmeldungen gespeichert sind.

5. Verfahren nach Anspruch 3 oder 4, bei dem
eine Alarmkategorie (Alarm) mittels einer spezifischen Systeminformation (SIB) oder mittels einer Kodierung einer für weitere Informationen verwendeten Systeminformation (SIB 3) den Teilnehmerendgeräten (UE) signalisiert wird.

6. Teilnehmerendgerät (UE) eines Funk-Kommunikationssystems, aufweisend zumindest eine Empfangseinrichtung (SEE) zum Empfangen zumindest einer von einer Basisstation in einem Steuerkanal übertragenen Systeminformation (SIB), mittels der das Vorliegen eines Alarms signalisiert wird,
**gekennzeichnet durch**
eine Steuereinrichtung (ST) zum Steuern der Ausgabe zumindest einer in einer Speichereinrichtung (SP) jeweils hinterlegten Alarmmeldung, und Ausgabemittel (UI) zum Ausgeben der Alarmmeldung.

7. Funknetzsteuerung (RNC) eines Funk-Kommunikationssystems, aufweisend zumindest eine Sende/Empfangseinrichtung (SEE) zum Empfangen zumindest einer Alarmmeldung und zum Signalisieren des Vorliegens eines Alarms mittels einer Systeminformation auf einer Funkschnittstelle
**gekennzeichnet durch**
eine Steuereinrichtung (ST) zum Steuern eines Ergänzens von zumindest einer Systeminformation um die Signalisierung des Vorliegens eine Alarms zur Aussendung auf der Funkschnittstelle für eine Ausgabe jeweils einer Alarmmeldung durch zumindest ein empfangendes Teilnehmerendgerät (UE).

8. Basisstation (NB1) eines Funk-Kommunikationssystems, aufweisend zumindest eine Sende/Empfangseinrichtung (SEE) zum Empfangen zumindest einer Signalisierung des Vorliegens eines Alarms und zum Signalisieren des Vorliegens des Alarms mittels einer ergänzten Systeminformation auf einer Funkschnittstelle
**gekennzeichnet durch** die Sende/Empfangseinrichtung zur Signalisierung des Vorliegens des Alarms zur Ausgabe jeweils einer Alarmmeldung **durch** zumindest ein empfangendes Teilnehmerendgerät (UE).

9. Funk-Kommunikationssystem bestehend aus zumindest einer Funknetzsteuerung (RNC) nach Anspruch 7, zumindest eines Teilnehmerendgerätes (UE) nach Anspruch 6 und zumindest einer Basisstation (NB1) nach Anspruch 8.

## Claims

1. Method for emission of alarm messages at subscriber terminals (UE) in a radio communications system, in which the presence of an alarm is signalled to the subscriber terminals (UE) by means of at least one system information item (SIB) from at least one base station (NB1) in the radio communications system using a control channel, **characterized in that**
at least one respectively stored alarm message is emitted as a consequence of the reception of the at least one system information item (SIB) by the subscriber terminals (UE).

2. Method according to Claim 1, wherein
the at least one stored alarm message is emitted optically and/or acoustically, by the subscriber terminals (UE).

3. Method according to Claim 1 or 2, in which
the at least one system information item (SIB) makes it possible to distinguish between a plurality of alarm categories (Alarm) which are emitted as corresponding alarm messages by the subscriber terminals (UE).

4. Method according to Claim 3, in which
alarm messages associated with the alarm categories (Alarm) are stored in the subscriber terminals (UE).

5. Method according to Claim 3 or 4, in which
an alarm category (Alarm) is signalled to the subscriber terminals (UE) by means of a specific system information item (SIB) or by means of a coding referring to another system information item (SIB3) which is used for further information.

6. Subscriber terminal (UE) for a radio communications system, having at least one receiving device (SEE) for reception of at least one system information item (SIB) which is transmitted by a base station using a control channel, by means of which the presence of an alarm is signalled,
**characterized by** a control device (ST) for controlling the output of at least one alarm message, wherein each alarm message is stored in a memory device (SP), and output means (UI) for emission of the alarm message.

7. Radio network controller (RNC) for a radio communications system, having at least one transmitting/receiving device (SEE) for reception of at least one alarm message and for signalling the presence of an alarm by means of system information on a radio interface,
**characterized by**
a control device (ST) for controlling an addition to at least one system information item to signal the presence of an alarm for transmission on the radio interface for emitting one respective alarm message by at least one receiving subscriber terminal (UE).

8. Base station (NB1) of a radio communication system, having at least one transmitting/receiving device (SEE) for receiving at least one signal of the presence of an alarm and for signalling the presence of the alarm by means of an additional system information item on a radio interface,
**characterized by** the transmitting/receiving device to signal the presence of the alarm for emitting one respective alarm message by at least one receiving subscriber terminal (UE).

9. Radio communications system comprising at least one radio network controller (RNC) according to Claim 7, at least one subscriber terminal (UE) according to Claim 6 and at least one base station (NB1) according to Claim 8.

## Revendications

1. Procédé pour émettre des messages d'alarme sur des terminaux d'usagers (UE) d'un système de radiocommunication, dans lequel au moins une station de base (NB1) du système de radiocommunication signale la présence d'une alarme aux terminaux d'usagers (UE) au moyen d'au moins une information système (SIB), **caractérisé en ce que**, suite à la réception de l'au moins une information système (SIB), les terminaux d'usagers (UE) émettent au moins un message d'alarme respectivement stocké.

2. Procédé selon la revendication 1, l'au moins un message d'alarme stocké étant émis optiquement et/ou acoustiquement par les terminaux d'usagers (UE).

3. Procédé selon la revendication 1 ou 2, dans lequel peut être discriminée, au moyen de l'au moins une information système (SIB), une pluralité de catégories d'alarme (Alarm) qui sont émises par les terminaux d'usagers (UE) sous la forme de messages d'alarme correspondants.

4. Procédé selon la revendication 3, dans lequel des messages d'alarme associés aux catégories d'alarme (Alarm) sont stockés dans les terminaux d'usagers (UE).

5. Procédé selon la revendication 3 ou 4, dans lequel une catégorie d'alarme (Alarm) est signalée aux terminaux d'usagers (UE) au moyen d'une information système spécifique (SIB) ou au moyen d'un codage d'une information système (SIB 3) utilisée pour d'autres informations.

6. Terminal d'usager (UE) d'un système de radiocommunication, comportant au moins un dispositif récepteur (SEE) pour recevoir au moins une information système (SIB) transmise par une station de base dans un canal de commande et au moyen de laquelle la présence d'une alarme est signalée, **caractérisé par** un dispositif de commande (ST) pour commander l'émission d'au moins un message d'alarme déposé respectivement dans un dispositif de mémoire (SP) et des moyens d'émission (UI) pour émettre le message d'alarme.

7. Commande de réseau radio (RNC) d'un système de radiocommunication, comportant au moins un dispositif émetteur / récepteur (SEE) pour recevoir au moins un message d'alarme et pour signaler la présence d'une alarme au moyen d'une information système sur une interface radio, **caractérisée par** un dispositif de commande (ST) pour commander le complètement d'au moins une information système par la signalisation de la présence d'une alarme pour émission sur l'interface radio pour une émission respectivement d'un message d'alarme par au moins un terminal d'usager récepteur (UE).

8. Station de base (NB1) d'un système de radiocommunication, comportant au moins un dispositif émetteur / récepteur (SEE) pour recevoir au moins une signalisation de la présence d'une alarme et pour signaler la présence de l'alarme au moyen d'une information système complétée sur une interface radio, **caractérisée par** le dispositif émetteur / récepteur pour la signalisation de la présence de l'alarme pour l'émission respectivement d'un message d'alarme par au moins un terminal d'usager récepteur (UE).

9. Système de radiocommunication composé d'au moins une commande de réseau radio (RNC) selon la revendication 7, d'au moins un terminal d'usager (UE) selon la revendication 6 et d'au moins une station de base (NB1) selon la revendication 8.
